# DEMANDE DE BREVET EUROPEEN

(11) **EP 2 269 878 A1**
(43) Date de publication de la demande: **05.01.2011**
(21) Numéro de dépôt: 10167999.1
(22) Date de dépôt: 30.06.2010
(51) Int. Cl.: B60S 1/48, B60S 1/50

(54) **Réservoir de liquide de lavage avec une chambre chauffée et régulée thermiquement et dispositif de lavage contenant un tel réservoir pour un véhicule automobile**

(30) Priorité: 03.07.2009 FR 0954612
(71) Demandeur: PEUGEOT CITROËN AUTOMOBILES S.A., 78140 Velizy Villacoublay (FR); Trelleborg Fluid & Acoustic Solutions (TFAS), 44470 Carquefou (FR)
(72) Inventeur: Merour, Sylvain, 44120, VERTOU (FR); Gaudiau, Ghislain, 44150, ANCENIS (FR); Jeuffe, Gérard, 78580, BAZEMONT (FR); Lefebvre, Ludovic, 92700, COLOMBES (FR); Vanharen, Vincent, 27200, CHAVIGNY-BAILLEUL (FR)
(74) Mandataire: Thinat, Michel

(57) **Abrégé**

L'invention concerne un réservoir de liquide de lavage avec une chambre chauffée et régulée thermiquement et dispositif de lavage contenant un tel réservoir pour un véhicule automobile.

Ce réservoir (R) est **caractérisé en ce qu**'il comprend un second orifice (8) disposé en partie supérieure de la paroi (7) et assurant une circulation de liquide de la chambre chaude (2) vers la chambre froide (1), ce second orifice (8) étant associé à un dispositif d'obturation (10, 10a ou 10b) permettant la diminution ou l'arrêt de la circulation de liquide.

Application dans le domaine des véhicules automobiles.

## Description

La présente invention concerne, d'une façon générale, un réservoir de liquide de lavage pour véhicule automobile ainsi qu'un dispositif de lavage contenant un tel réservoir.

Plus particulièrement, la présente invention concerne un réservoir de liquide de lavage comportant une chambre chauffée avec une régulation thermique.

L'invention trouve une application particulière mais non limitative dans le lavage de vitres ou de projecteurs d'un véhicule automobile.

De manière classique, la projection du liquide de lavage sur le pare-brise ou les projecteurs du véhicule est assurée par un ou plusieurs organes de pulvérisation, du type gicleur, alimentés en liquide de lavage par une pompe d'alimentation depuis un réservoir contenant le liquide de lavage. Ce liquide de lavage est habituellement composé d'un mélange d'eau et d'alcool en proportion élevée. En dépit de la présence d'alcool, la qualité de lavage reste médiocre.

Pour améliorer la qualité de lavage, il est aussi connu de réchauffer le liquide de lavage. Le réchauffage du liquide de lavage permet également de diminuer la proportion d'alcool dans le mélange et, ainsi, de contribuer à la préservation de l'environnement.

Ainsi, il est connu de réchauffer le liquide de lavage contenu dans un réservoir à chambre unique par un corps de réchauffage, notamment un élément associé au moteur du véhicule. Dans ce cas, étant donné la contenance du réservoir, le temps nécessaire au réchauffement du liquide de lavage contenu dans la chambre unique est long.

En outre, un autre inconvénient est que la température propre de l'élément associé au moteur risque de subir des variations brusques, avec des risques pouvant en découler sur le bon fonctionnement du moteur.

Pour diminuer le temps de chauffage du liquide du réservoir et éviter le dernier inconvénient, il est aussi connu des réservoirs de liquide de lavage pourvus d'une première et d'une seconde chambre avec au moins une cloison les séparant, ceci au moins partiellement (voir notamment le document FR-A-2 918 622).

La première chambre, dite froide, comporte dans sa partie supérieure au moins un orifice de remplissage du liquide tandis que la seconde chambre, dite chaude, comporte dans sa partie inférieure au moins un orifice de communication.

Cette seconde chambre est sensiblement plus petite que la première et peut avantageusement présenter une cloison commune à un corps de réchauffage, par exemple une chambre de dégazage, de manière à assurer le réchauffage du liquide qu'elle contient par transfert de chaleur du corps de réchauffage vers cette seconde chambre. Un autre moyen de chauffage peut cependant être mis en oeuvre pour chauffer cette chambre.

La cloison de la chambre chaude, de volume réduit, en contact avec le corps de réchauffage présente une surface suffisante pour assurer une élévation de température rapide et un maintien de ladite température à l'intérieur de la chambre chaude. En outre, le volume réduit de la chambre chaude permet d'éviter une baisse brutale de la température dans le corps de réchauffage.

L'orifice de communication de la chambre chaude la faisant communiquer avec ladite chambre froide est ménagé dans ladite cloison séparative afin de permettre le remplissage de ladite chambre chaude à partir de ladite chambre froide, cela essentiellement par communication entre les deux chambres.

La solution consistant à prélever les calories nécessaires à l'élévation de la température du liquide de lavage contenu dans la chambre chaude du réservoir, par exemple logé dans le compartiment moteur du véhicule, à partir de la boîte de dégazage ou vase d'expansion de son circuit de refroidissement permet effectivement un chauffage efficace du liquide de lavage contenu dans cette chambre chaude. Cependant, cette solution présente des inconvénients.

Un inconvénient est qu'il peut se créer un gradient de température de l'ordre de 30°C entre la température du liquide en partie haute de la chambre chaude et la température du liquide en partie basse de celle-ci. Ainsi, le liquide qui est situé en partie basse où se trouve généralement l'orifice de pompage est celui présentant la plus faible température. Il en résulte que, lors de la phase de pompage de liquide, le liquide évacué par l'orifice de pompage est peu réchauffé, ce qui ne permet pas d'obtenir un lavage optimal des vitres et des projecteurs.

Dans cette configuration, la température du liquide de lavage est le résultat du transfert de chaleur avec le corps de réchauffage associé au moteur à travers la paroi d'échange diminué des pertes vers l'extérieur. Ces pertes sont liées à la conception du réservoir, par exemple, entre autres, la surface d'échange de la chambre chaude avec l'air ambiant, la paroi d'isolation avec la première chambre dite froide, celle-ci pouvant être le cas échéant double, le diamètre des orifices de communication et la température extérieure.

Cela induit donc un chauffage moins important du liquide lave-glace dans les fonctionnements plus modérés du moteur d'où une perte d'efficacité du réservoir.

Ceci est essentiellement dû au fait que dans le réservoir précédemment décrit à deux chambres, la régulation de la température est passive et se fait de manière naturelle sans pouvoir être contrôlée.

Inversement, un second inconvénient se produit quand le liquide de lavage est trop chaud. Dans ce cas, ce liquide peut provoquer la détérioration d'éléments compris dans le dispositif de lavage, par exemple un balais d'essuie-glace.

Le but de la présente invention consiste à munir un réservoir à deux chambres contenant du liquide de lavage d'un système de régulation de la température de ce liquide, ce système étant simple et efficace et permettant d'éviter les deux inconvénients cités plus haut.

A cet effet, l'invention a pour objet un réservoir de liquide de lavage dans un véhicule automobile avec une chambre froide et une chambre chaude contenant chacune du liquide de lavage, la chambre chaude étant en échange de chaleur direct ou indirect avec un corps de réchauffage pour réchauffer son liquide de lavage et présentant au moins une paroi la séparant, au moins partiellement, de la chambre froide, cette paroi présentant au moins un premier orifice afin d'assurer une circulation de liquide de la chambre froide vers la chambre chaude, **caractérisé en ce qu**'il comprend un second orifice disposé en partie supérieure de la paroi et assurant une circulation de liquide de la chambre chaude vers la chambre froide, ce second orifice étant associé à un dispositif d'obturation permettant la diminution ou l'arrêt de la circulation de liquide correspondante.

Selon des caractéristiques additionnelles de la présente invention :
- la fermeture et l'ouverture du dispositif d'obturation sont régulées en fonction de la température du liquide de lavage,
- le dispositif d'obturation est sous la forme d'un thermostat, d'un bilame ou d'un fil thermo-dilatable,
- le dispositif d'obturation est placé dans une des chambres, la température du liquide de lavage de cette chambre étant la température de régulation de fermeture et d'ouverture dudit dispositif,
- le dispositif d'obturation est placé dans la chambre chaude et obture son second orifice,
- la chambre chaude comporte un conduit de sortie à l'extérieur du réservoir du liquide de lavage contenu dans celle-ci, le dispositif d'obturation étant en position de fermeture tant que la température du liquide

de la chambre chaude n'a pas atteint une valeur prédéterminée minimale et/ou en position d'ouverture dès que la température du liquide quittant cette chambre par le conduit dépasse une valeur prédéterminée maximale,
- les orifices sont sensiblement alignés sur la hauteur de la paroi de la chambre chaude,
- la paroi de la chambre chaude présentant les orifices est séparée de la paroi en regard de la chambre froide par un espacement, les orifices de la paroi étant prolongés par un canal respectif permettant la circulation du liquide de lavage entre les deux chambres,
- un moyen d'étanchéité est logé au moins partiellement dans le second orifice de la paroi afin de garantir l'étanchéité entre ce second orifice et le dispositif d'obturation.

L'invention concerne également un dispositif de lavage, en particulier de vitres ou de projecteurs dans un véhicule automobile, finissant par un système de lavage, **caractérisé en ce qu**'il comprend un tel réservoir, la chambre chaude débouchant directement ou indirectement sur ledit système.

L'effet technique de la présente invention est de proposer un réservoir de liquide de lavage du type précité pour véhicule automobile dont la conception permet d'évacuer par son conduit de sortie un liquide de température élevée en diverses conditions de roulage du véhicule automobile tout en maintenant la température de ce liquide en dessous du seuil de dangerosité ou d'altération d'éléments servant au lavage.

L'invention va maintenant être décrite plus en détail mais de façon non limitative en regard des figures annexées, dans lesquelles :
- la figure 1 est une vue latérale partiellement coupée en perspective d'un ensemble boîte de dégazage et réservoir à deux chambres, selon l'art antérieur,
- la figure 2 est une vue latérale partiellement coupée en perspective d'un ensemble boîte de dégazage et réservoir à deux chambres, selon la présente invention,
- la figure 3 est une vue de dessus d'une coupe longitudinale agrandie du réservoir à deux chambres selon la présente invention, montrant un mode préférentiel de réalisation du dispositif d'obturation, celui-ci étant à cette figure en position fermée,
- la figure 4 est une vue de dessus d'une coupe longitudinale agrandie du réservoir à deux chambres selon la présente invention, montrant le même mode préférentiel de réalisation du dispositif d'obturation que la figure 3, celui-ci étant à la figure 4 en position ouverte,
- la figure 5 est une coupe longitudinale en perspective du réservoir à deux chambres selon la présente invention, montrant le même mode préférentiel de réalisation du dispositif d'obturation,
- la figure 6 est une vue agrandie en perspective d'une coupe longitudinale de la paroi de séparation entre la chambre chaude et la chambre froide selon la présente invention, montrant un mode de réalisation de l'étanchéité entre le second orifice de cette paroi et le dispositif d'obturation montré à la figure 5,
- la figure 7 est une vue latérale partiellement coupée en perspective d'un ensemble boîte de dégazage et réservoir à deux chambres, selon la présente invention, ceci dans une autre configuration que la figure 2, étant donné que la boîte de dégazage associée à ce réservoir est de forme sphérique,
- les figures 8 à 10 montrent un thermostat simple effet agrandi pouvant servir de dispositif d'obturation dans une autre forme de réalisation de la présente invention.

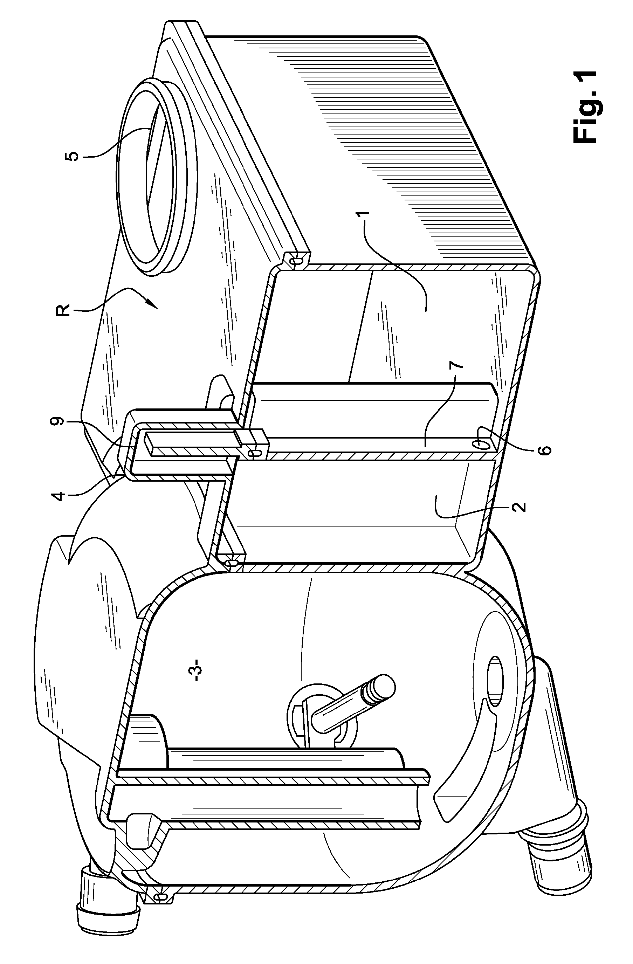

En référence à la figure 1, on a représenté un réservoir à deux chambres, ce réservoir étant référencé R. Il est sous forme, de manière connue en soi, d'un ensemble compact comprenant une chambre principale de réserve de liquide de lavage représentant la première chambre ou chambre froide 1.

Le réservoir R comprend aussi une seconde chambre, appelée aussi chambre chaude 2 présentant un faible volume par rapport à la chambre froide 1.

A la figure 1, une boîte de dégazage du circuit de refroidissement du moteur illustre un corps de réchauffage 3, ce corps 3 étant avantageusement un élément associé au moteur. Ce corps de réchauffage 3 est en échange de chaleur direct, comme montré à la figure 1, ou indirect avec la chambre chaude 2 afin de réchauffer le liquide de lavage contenu dans celle-ci.

Il est à noter que le corps de réchauffage 3 peut être monobloc avec le réservoir R en étant intégré à celui-ci, ledit corps 3 étant formé d'une ou plusieurs parties venues de moulage avec les parties constitutives du réservoir R, comme montré à la figure 1, mais ceci n'est pas obligatoire.

Cette chambre chaude 2 du fait de l'échange de chaleur avec la boîte de dégazage, illustrant le corps de réchauffage 3, relativement chaude et de son faible volume, monte rapidement en température, en particulier dans sa zone supérieure.

La chambre froide 1, qui contient la majeure partie du liquide de lavage de ou des éléments du véhicule à nettoyer, par exemple des vitres ou des projecteurs, est thermiquement isolée de la boîte de dégazage illustrant le corps de réchauffage 3, ceci par une paroi 4 contenant avantageusement une lame d'air afin de ne pas pomper de calories de ce corps 3.

La chambre froide 1 contient aussi à sa partie supérieure, de préférence sur sa face supérieure un orifice de remplissage 5 pour son alimentation en liquide de lavage par l'utilisateur du véhicule. De manière connue, cet orifice 5 est obturé par un couvercle après remplissage de la chambre froide 1.

En référence également à la figure 1, la chambre chaude 2 est située sur un côté de la boîte de dégazage 3, et comprend un conduit de sortie, non montré à cette figure car dans la partie avant omise de cette chambre chaude 2, une pompe étant avantageusement implantée au point le plus bas possible du volume disponible de cette chambre 2 pour l'évacuation du liquide de lavage de cette chambre chaude 2 par ce conduit en vue du lavage de l'élément ou des éléments du véhicule à nettoyer.

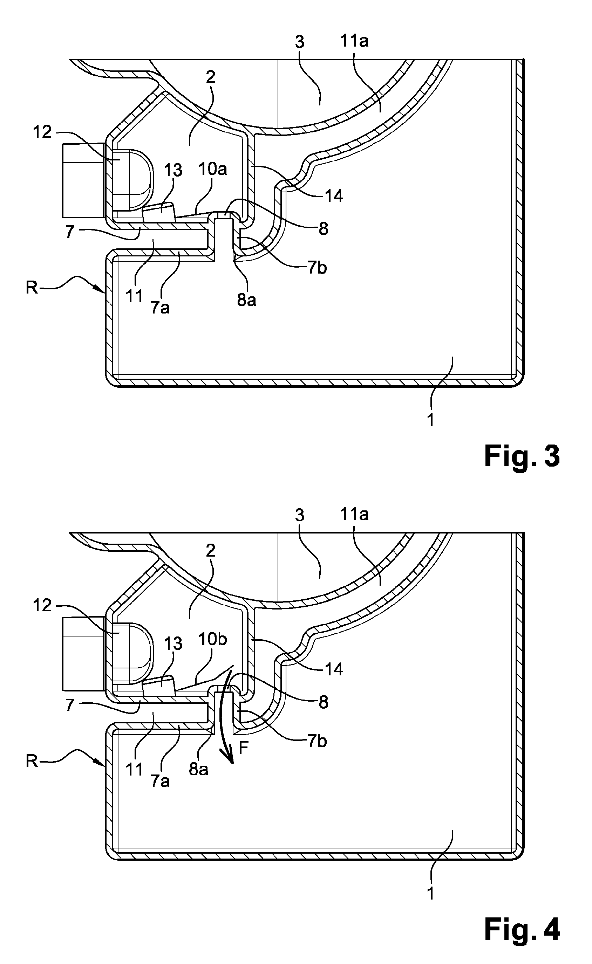

Ce conduit sera visible aux figures 3 à 5 qui seront détaillées ultérieurement.

La chambre chaude 2 peut être avantageusement munie d'un tube de régulation, non montré aux figures, dont la hauteur conditionne la température du liquide de lavage sortant de cette chambre 2. En effet, dans cette chambre chaude 2, le liquide de lavage le plus chaud se trouve en haut de cette chambre 2, tandis que le liquide dans la zone basse de la chambre 2 est plus froid.

Un orifice calibré 6 de communication permet de mettre en relation les deux chambres 1 et 2 du réservoir R. Cet orifice 6 est disposé à son niveau inférieur sur une paroi 7 de la chambre chaude 2, directement ou indirectement adjacente à la chambre froide 1, et permet le remplissage de la chambre chaude 2.

La paroi 7 peut être commune aux deux chambres froide 1 et chaude 2, auquel cas elle assure une jonction directe de ces deux chambres. Elle peut aussi ne pas être commune aux deux chambres 1 et 2, auquel cas elle appartient seulement à la chambre chaude 2 et n'est qu'un élément de la jonction entre ces deux chambres 1 et 2, la chambre froide présentant alors une paroi en regarde de la paroi 7 de la chambre chaude 2 avec un espacement entre les deux parois. Un exemple d'une telle délimitation indirecte entre chambres froide 1 et chaude 2 sera montré ultérieurement aux figures 3 et 4.

A la figure 1, la chambre chaude 2 présente, à sa partie supérieure, un dispositif 9 d'évacuation d'air de cette chambre lors de son remplissage. Ce dispositif 9 d'évacuation d'air, la faisant communiquer avec la chambre froide 1, est du type siphon et présente avantageusement une forme en U renversé avec une séparation médiane dans celui-ci afin d'éviter les possibles sorties intempestives de liquide de lavage de la chambre chaude 2 à travers ce dispositif.

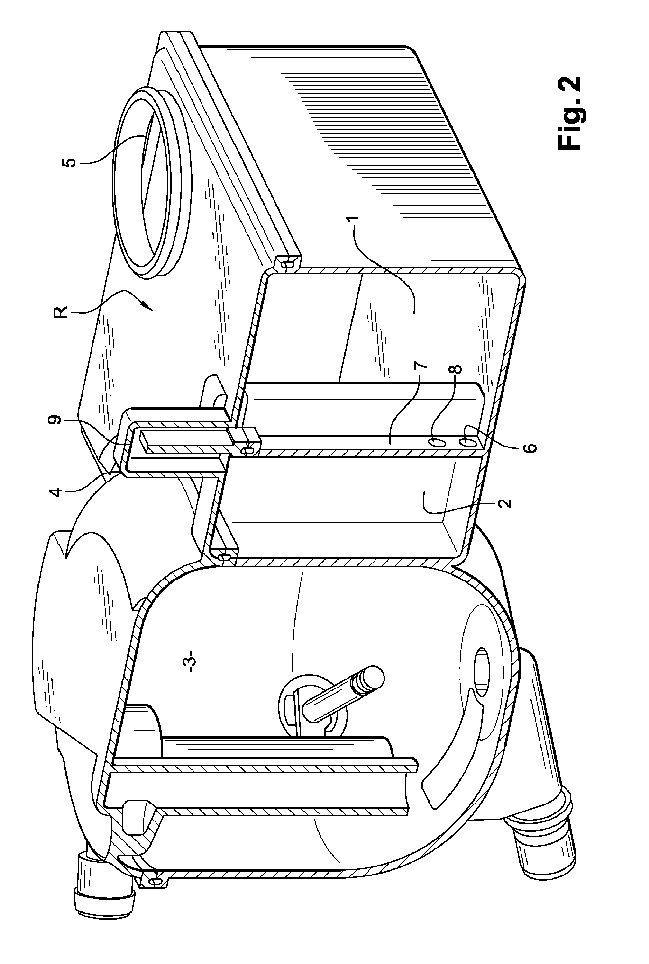

La figure 2 montre une forme de réalisation du réservoir R selon la présente invention. Cette forme est la forme préférée de réalisation de l'invention mais n'est pas exclusive.

A la figure 2, par rapport à la conception précédente du réservoir R montré à la figure 1, celui-ci comporte un second orifice 8 dans la paroi 7 séparant directement ou indirectement les deux chambres 1 et 2 du réservoir R. L'orifice calibré 6 de communication entre la chambre froide 1 et la chambre chaude 2 pour l'alimentation de celle-ci, montré à la figure 1 dans la paroi 7, est alors appelé premier orifice.

Ainsi, de manière générale, la présente invention concerne un réservoir R de liquide de lavage dans un véhicule automobile avec une chambre froide 1 et une chambre chaude 2 contenant chacune du liquide de lavage, la chambre chaude 2 étant en échange de chaleur direct ou indirect avec un corps de réchauffage 3 pour réchauffer son liquide de lavage et présentant au moins une paroi 7 la séparant, au moins partiellement, de la chambre froide 1, cette paroi 7 présentant au moins un premier orifice 6 afin d'assurer une circulation de liquide de la chambre froide 1 vers la chambre chaude 2, **caractérisé en ce qu**'il comprend un second orifice 8 disposé en partie supérieure de la paroi 7 et assurant une circulation de liquide de la chambre chaude 2 vers la chambre froide 1, ce second orifice 8 étant associé à un dispositif d'obturation permettant la diminution ou l'arrêt de la circulation de liquide correspondante.

Le dispositif d'obturation est montré aux figures 3 à 5 et sera expliqué ultérieurement.

La hauteur de positionnement du second orifice 8 sur la paroi 7 est avantageusement prédéterminée afin d'obtenir un échange de chaleur souhaité entre la chambre chaude 2 et la chambre froide 1. Ceci permet d'obtenir une température adéquate dans la chambre chaude 2, c'est-à-dire ni trop chaude afin d'éviter la possible détérioration d'élément du dispositif de lavage et ni trop froide afin de réaliser un lavage efficace. Il est à noter que le second orifice 8 peut se trouver avantageusement près de l'orifice 6 et n'est pas forcément dans la partie supérieure de la paroi 7.

Mise à part la circulation de liquide de lavage à travers le second orifice 8 de la chambre chaude 2 vers la chambre froide 1 qui est une des caractéristiques essentielles de la présente invention, le remplissage des différentes chambres 1 et 2 du réservoir R s'effectue de la même manière que précédemment indiquée à la figure 1 pour un réservoir R de l'état de la technique, notamment par l'orifice de remplissage 5 pour la chambre froide 1 et le premier orifice 6 de la paroi 7 pour la chambre chaude 2.

Comme précédemment mentionné, le second orifice 8 est obturé, avantageusement du côté de la chambre chaude 2 par un dispositif d'obturation. Un mode avantageux mais non exclusif de ce dispositif d'obturation est montré aux figures 3 et 4.

A ces figures, le dispositif d'obturation se trouve dans la chambre chaude 2 et est sous la forme d'un bilame 10a ou 10b. La figure 3 montre le bilame 10a en position d'obturation de le second orifice 8, une étanchéité étant au moins partiellement assurée au niveau de l'interface entre ces deux chambres 1 et 2. La figure 4 montre le bilame 10b en position dégagée d'obturation de l'orifice 8, ce bilame 10b étant alors à distance de ce second orifice 8.

A ces deux figures, le bilame 10a ou 10b est fixé à une de ses extrémités à la paroi 7 par l'intermédiaire d'un support 13 fixe. De préférence, ce support 13 fait partie d'une pièce, réalisée avantageusement par injection, formant au moins la paroi 7 et est ainsi monobloc avec cette paroi 7.

Il est aussi possible d'utiliser un autre dispositif d'obturation que celui réalisé par un bilame. Ainsi il est possible d'utiliser un thermostat comme dispositif d'obturation, par exemple un thermostat simple effet. Celui-ci peut comporter une base formant un clapet pouvant obstruer l'orifice de communication pour une gamme de température du liquide de refroidissement, ce clapet se détachant de l'orifice et n'entravant plus la circulation de liquide quand une température prédéterminée est atteinte.

Cependant, dans le cas d'un dispositif d'obturation, par exemple un bilame 10a et 10b, non parfaitement étanche, l'évacuation de l'air pourrait être assurée par le second orifice 8 communiquant avec un orifice 8a en regard et prévu dans la chambre froide 1. Ceci peut permettre la suppression du dispositif d'évacuation d'air de type siphon référencé 9 aux figures 1 et 2.

Lors du chauffage du liquide lave-glace dans la chambre chaude 2 et sous l'effet des phénomènes de convection naturelle, un gradient de température se crée dans cette chambre 2. Le liquide de lavage le plus chaud monte dans à la partie supérieure de la chambre chaude 2 tandis que sa partie inférieure contient le liquide le plus froid.

Au départ, lorsque le liquide de lavage n'a pas atteint une température suffisante, le bilame 10a est, comme montré à la figure 3, en position d'obturation du second orifice 8.

Lorsque le liquide de lavage de la chambre chaude 2 qui est dans l'environnement proche du bilame 10a atteint une température suffisamment élevée, celui-ci par dilatation différentielle de ses deux lames se déforme et s'écarte de la paroi 7 en prenant la forme référencée 10b à la figure 4. Le second orifice 8 n'est alors plus obstrué.

Par convection naturelle, le liquide de lavage chaud peut alors s'évacuer de la chambre chaude 2 en suivant la flèche F et aller se refroidir dans la chambre froide 1 tandis que du liquide de lavage froid entre par le premier orifice de communication, non visible aux figures 3 et 4.

Lorsque la température du liquide de lavage proche du bilame 10b, montré à la figure 4, retrouve des niveaux plus faibles, le bilame 10a, comme montré à la figure 3, vient se repositionner contre la paroi 7 et obstrue à nouveau le second orifice 8, comme montré à la figure 3, empêchant alors les fuites thermiques.

Tel est le fonctionnement d'un mode de réalisation préférentielle de la régulation thermique du liquide de lavage selon la présente invention. Le dispositif d'obturation 10a ou 10b est en position de fermeture tant que la température du liquide de la chambre chaude 2 n'a pas atteint une valeur prédéterminée minimale et en position d'ouverture dès que la température du liquide quittant cette chambre dépasse une valeur prédéterminée maximale.

La température maximale du liquide de lavage de la chambre chaude 2 dans l'environnement du bilame 10a, montré à la figure 3, qui déclenche l'ouverture de celui-ci n'est pas forcément la même que la température maximale de sortie du liquide de lavage. Cette dernière peut lui être inférieure dans le cas où elle correspond à une hauteur du liquide de lavage dans la chambre chaude 2 moins élevée que la hauteur du second orifice 8. Cette température maximale du liquide de lavage dans l'environnement du bilame 10a peut aisément être déterminée expérimentalement en fonction de la température maximale de sortie désirée.

Ainsi, préférentiellement, le second orifice 8 de la chambre chaude 2, servant à la régulation thermique, peut être disposé à une hauteur déterminée de la paroi 7 pour être, du fait du gradient de température, à un niveau de température permettant de toujours garder la température du liquide de lavage devant être projeté sur l'élément, par exemple les essuie-glace, afin d'éviter tout accident lors de la projection de ce liquide.

Accessoirement, il est possible de voir aux figures 3 et 4 que la paroi 7 de la chambre chaude 2 n'est pas commune à cette chambre 2 et à la chambre froide 1.

Cette dernière présente une paroi 7a séparée de la paroi 7 de la chambre chaude 2 par une lame d'air 11 dans un but d'isolation thermique entre ces deux chambres 1 et 2. Pour assurer la communication entre ces deux chambres 1 et 2 par le second orifice 8 de la paroi 7 de la chambre chaude 2, la partie de la paroi 7a de la chambre froide en regard de cet orifice 8 est configurée afin de former un canal 7b reliant le second orifice 8 de la chambre chaude 2 à un orifice d'entrée 8a dans la chambre froide 1. Dans ce cas, la paroi 7 de la chambre chaude 2 assure une liaison indirecte avec la chambre froide 1.

Sur un autre côté 14 de la chambre chaude 2 qui est en regard de la chambre froide 1 et 2, ces deux chambres 1 et 2 sont aussi séparées par une lame d'air 11a. Cette lame d'air 11a isole aussi le corps de réchauffage 3, par exemple la boîte de dégazage, de la chambre froide 1.

Accessoirement encore, il est possible de voir à ces figures le conduit 12 de sortie de liquide de lavage de la chambre chaude 2 afin d'amener ce liquide au dispositif de projection sur l'élément ou les éléments à nettoyer, par exemple une buse ou des buses de projection, ce dispositif n'étant pas montré aux figures.

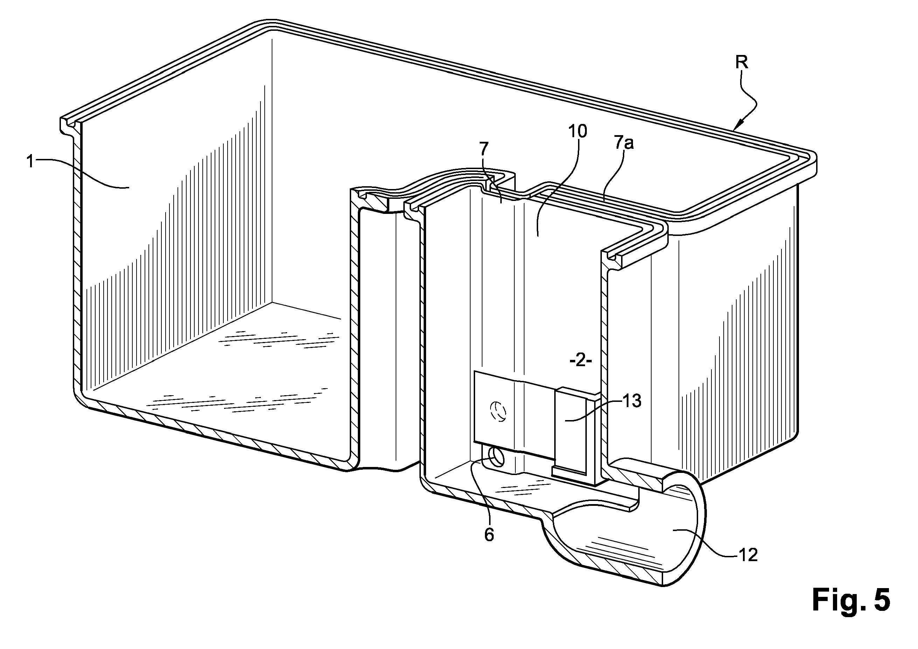

La figure 5 illustre essentiellement la même configuration du réservoir R que celle montrée aux figures 3 et 4.

Cette figure 5 montre la partie du bilame 10 opposée à celle obturant le second orifice de la paroi 7, ce second orifice n'étant pas visible à cette figure, ce qui n'est pas le cas du premier orifice 6 à la partie inférieure de cette paroi 7. Le bilame 10 s'étend avantageusement perpendiculairement à la hauteur de la paroi 7 de la chambre chaude 2 en étant fixé à une de ses extrémités à cette chambre 2 par l'intermédiaire de son support 13.

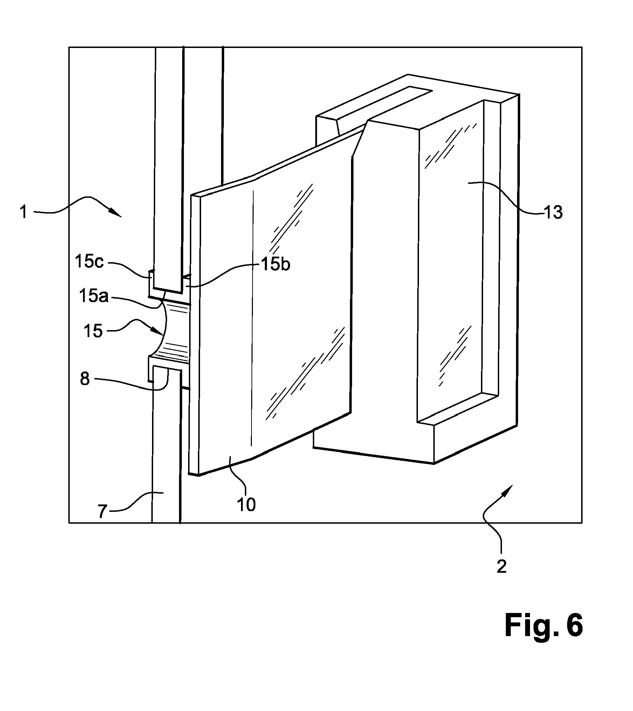

La figure 6 montre un mode de réalisation de l'étanchéité entre second orifice 8 de la paroi 7 et bilame 10 selon le mode de réalisation du dispositif d'obturation selon la figure 5.

Il peut en effet être avantageux de renforcer l'étanchéité entre le bilame et ce second orifice 8.

A cette figure 6, le second orifice comprend un moyen d'étanchéité 15 sous la forme d'un joint dont une première partie 15a pénètre dans cet orifice 8 et entoure les parois de celui-ci formant le canal traversant la paroi 7. Une seconde partie 15b de ce joint 15 présente la forme d'une collerette qui coiffe le pourtour de l'extrémité de cet orifice 8 débouchant sur la face de la paroi 7 en regard du bilame 10 dans la chambre chaude 2.

Avantageusement, le joint 15 comprend, à son autre extrémité, une troisième partie 15c coiffant le pourtour de l'extrémité de cet orifice 8 débouchant sur la face opposée de la paroi 7, par exemple en regard de la chambre froide 1 ou d'un canal de communication entre chambres froide 1 et chaude 2, comme montré aux figures 3 et 4.

Comme il a déjà été mentionné précédemment avec l'utilisation d'un thermostat simple effet à la place d'un bilame, il est possible de prévoir un autre dispositif d'obturation du second orifice qu'un bilame comme montré aux figures 3 à 5. Tout dispositif permettant l'obturation de cet orifice ou d'un élément d'une des deux chambres communiquant avec cet orifice, cela à une température prédéterminée, peut être utilisé comme dispositif d'obturation.

Il est à noter qu'à la figure 6, le second orifice et son dispositif d'obturation sont situés en partie supérieure de la paroi 7 pour une meilleure visibilité du dispositif d'obturation. Ceci n'est pas forcément le cas et, au contraire, cet orifice 8 peut avantageusement se trouver plus bas sur cette paroi 7, notamment près du premier orifice.

Il est ainsi possible de prévoir le dispositif d'obturation du côté de la chambre froide 1, l'ouverture de ce dispositif d'obturation pouvant aussi être déterminée selon la température du liquide de lavage contenu dans cette chambre 1, une corrélation existant entre cette température et la température de sortie du liquide de la chambre 2.

Il est en outre possible de prévoir une chambre de mélange communiquant directement avec les chambres froide 1 et chaude 2, un dispositif d'obturation de la communication de la chambre de mélange avec respectivement les chambres froide 1 et chaude 2 étant prévu.

Ce dispositif d'obturation entre chambre froide 1 et chambre de mélange est ouvert quand la température du liquide de lavage dans la chambre de mélange dépasse une première valeur prédéterminée, le cas échéant, le dispositif d'obturation entre chambre chaude 2 et chambre de mélange étant fermé quand la température du liquide de lavage dans la chambre de mélange dépasse une seconde valeur prédéterminée.

Le dispositif d'obturation peut comporter avantageusement un thermostat à double effet, réalisant le dispositif d'obturation de la chambre froide 1 sous la forme d'un même élément que celui de la chambre chaude 2, chaque extrémité de ce thermostat coopérant avec respectivement l'orifice de la chambre froide 1 ou la chambre chaude 2.

Le réservoir R comprend aussi une seconde chambre, appelée aussi chambre chaude 2 présentant un faible volume par rapport à la chambre froide 1.

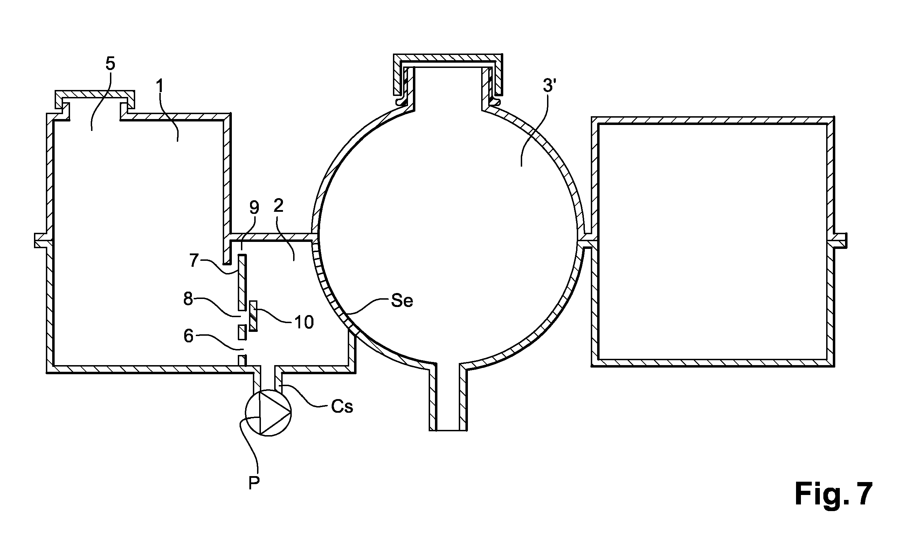

La figure 7 reprend sensiblement les mêmes éléments que ceux montrés à la figure 2 à la différence que la boîte de dégazage est de forme sphérique.

A cette, la boîte de dégazage sphérique 3' est en échange de chaleur direct, par la surface d'échange de chaleur Se avec la chambre chaude 2 afin de réchauffer le liquide de lavage contenu dans celle-ci.

La boîte de dégazage sphérique 3' peut être d'un seul tenant avec la chambre chaude 2.

Cette chambre chaude 2 du fait de l'échange de chaleur avec la boîte de dégazage 3' et de son faible volume, monte rapidement en température, en particulier dans sa zone supérieure.

La chambre froide 1, qui contient la majeure partie du liquide de lavage de ou des éléments du véhicule à nettoyer, par exemple des vitres ou des projecteurs, est thermiquement isolée de la boîte de dégazage 3', étant disposée à distance de cette boîte.

La chambre froide 1 contient aussi à sa partie supérieure, de préférence sur sa face supérieure un orifice de remplissage 5 pour son alimentation en liquide de lavage par l'utilisateur du véhicule. De manière connue, cet orifice 5 est obturé par un couvercle après remplissage de la chambre froide 1.

La chambre chaude 2 est située sur un côté de la boîte de dégazage 3' et comprend un conduit C d'évacuation de liquide de lavage, une pompe P étant avantageusement implantée dans ce conduit C pour l'évacuation du liquide de lavage de cette chambre chaude 2 par ce conduit en vue du lavage de l'élément ou des éléments du véhicule à nettoyer.

La chambre chaude 2 présente, à sa partie supérieure, un dispositif 9 d'évacuation d'air de cette chambre lors de son remplissage.

Un orifice calibré 6 de communication permet de mettre en relation les deux chambres 1 et 2 du réservoir. Cet orifice 6 est disposé à un niveau inférieur sur la paroi 7 de la chambre chaude 2, directement ou indirectement adjacente à la chambre froide 1, et permet le remplissage de la chambre chaude 2.

La paroi 7 comporte un second orifice 8 dans la paroi 7 séparant directement les deux chambres 1 et 2 du réservoir. Un dispositif d'obturation 10a de ce second orifice 8 est prévu pour la fermeture de celui-ci. Le dispositif d'obturation 10a est similaire à ceux décrits précédemment.

Le réservoir de liquide de lavage selon la présente invention peut ainsi être associé à tous types de boîtes de dégazage avec une surface d'échange Se plus ou moins importante entre la boîte de dégazage 3' et la chambre chaude 2.

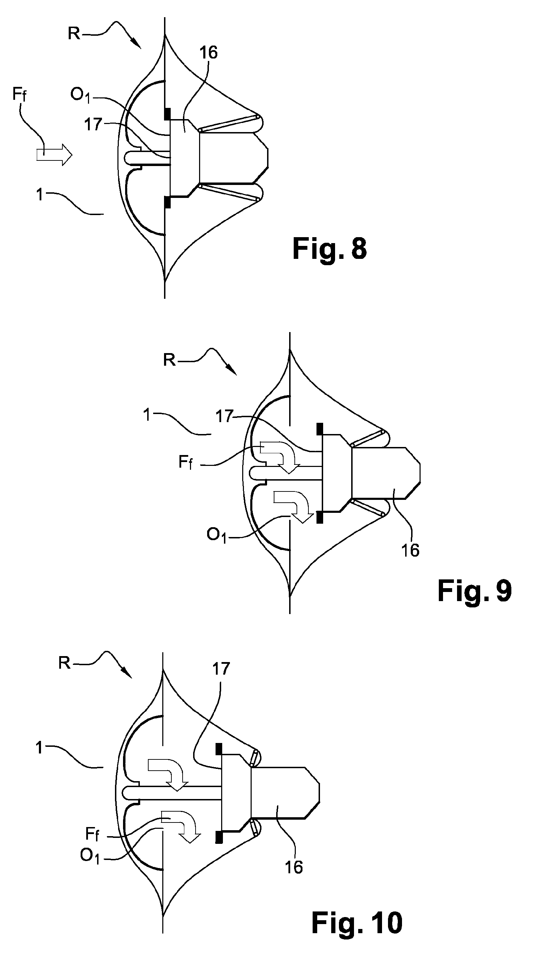

Les figures 8 à 10 montrent un thermostat simple effet pouvant servir de dispositif d'obturation dans une autre forme de réalisation de la présente invention. Ce thermostat simple est montré sous une forme agrandie par rapport au réservoir R montré aux figures précédentes.

Ce dispositif de fermeture à thermostat à simple effet comprend un corps central 16 avec, à une première extrémité, un clapet principal 17 pouvant obstruer l'orifice O1 de la chambre froide 1, orifice référencée 8 aux figures précédentes.

L'orifice 01 est fermé par le dispositif à thermostat simple effet tant que la température dans la chambre chaude est au-dessous de la température maximale prédéterminée correspondant à la température pour laquelle il n'y a pas de risque de détérioration du matériel de lavage, par exemple un essuie-glace. Ceci est le cas à la figure 8.

Aux figures 9 et 10, cette température maximale dans la chambre chaude est atteinte et le thermostat simple effet est en position ouverte pour laisser passer un flux de liquide de lavage de la chambre froide 1 vers la chambre chaude selon la flèche Ff.

Il est possible de prévoir deux positions d'ouverture du thermostat soit une position d'ouverture intermédiaire, montrée à la figure 9, laissant passer un flux moyen de liquide de lavage selon la flèche Ff et une position d'ouverture complète, montrée à la figure 10, laissant passer un flux plus important de liquide de lavage toujours selon la flèche Ff.

En général, pour tous les types de boîte de dégazage, le niveau de liquide de lavage dans les chambres 1 et 2 du réservoir peut ne pas atteindre la partie supérieure de ces chambres 1 et 2 afin de conserver une zone tampon d'air qui absorbe le volume de glace en cas de gel lors de l'arrêt du véhicule.

Pour tous les types de boîte de dégazage, la surface d'échange entre chambre chaude et boîte de dégazage est positionnée afin de ne pas être effective pour un faible niveau de liquide de lavage dans la chambre chaude, ceci pour éviter un risque de surchauffe dans cette chambre.

Il est possible aussi de prévoir dans la chambre chaude un élément de limitation de passage du liquide de lavage de la chambre chaude vers la boîte de dégazage. Cet élément de limitation est avantageusement positionné entre, d'une part, la paroi entre chambres chaude et froide et, d'autre part, la surface d'échange commune avec la boîte de dégazage afin d'obtenir une surface d'échange réduite. Cet élément peut être sous la forme d'un U renversé et introduit par la paroi supérieure de la chambre chaude. On obtient ainsi une solution modulable afin de limiter la chauffe dans la chambre chaude.

Accessoirement, afin de lutter contre la formation de bactéries ou d'algues dans le réservoir, il peut être possible de prévoir dans ce réservoir un petit sachet en matériau textile, papier ou autres qui soit suffisamment poreux afin de laisser diffuser vers l'extérieur, dans le liquide de lavage, le produit qu'il contient. Ce produit est avantageusement résistant aux constituants du liquide de lavage, à savoir essentiellement l'éthanol, le savon ou l'eau dure et contient au moins un composant bactéricide ou anti-algues qui résiste à la température pendant et après le fonctionnement de l'ensemble.

Ce sachet peut être fixé dans le réservoir par tout moyen approprié comme le collage ou le soudage, l'insertion dans une cage adéquate ou le positionnement par blocage entre chambres froide et chaude. Une fixation par l'intermédiaire d'un système de gonflement par reprise d'humidité en milieu liquide venant le bloquer en position peut aussi être utilisée.

Ce sachet est avantageusement positionné au fond du réservoir R, dans une zone toujours pleine de liquide de lavage avec une conception du réservoir permettant sa protection quand mis en position.

Avantageusement, le produit contenu dans le sachet diffuse au travers celui-ci afin de se dissoudre dans le liquide de lavage. Ce produit est avantageusement composé de constituants appropriés à enrayer la formation de ces bactéries ou algues, comme par exemple le chlore, le sulfate de cuivre, la catéchine, l'acide élagique, la tellimagrandine, l'acide salicylique, la pénicilline, sans que cela soit limitatif.

L'avantage majeur de la présente invention est de pouvoir réguler de manière active la température du liquide de lavage présent dans la chambre chaude du réservoir. L'application préférentielle de l'invention est la régulation de la température d'un liquide de lavage qui peut être destiné à être projeté par le système de projection final d'un dispositif de lavage sur un élément du véhicule automobile, tel que le pare-brise, une vitre de fenêtre ou un projecteur, en présence potentielle d'une personne et ainsi d'éviter les risques d'altération d'éléments du système de lavage.

Il est aussi possible d'adjoindre à cette application préférentielle une régulation de la température minimale que présente le liquide de lavage quittant la chambre chaude.

Cette régulation thermique active autorise en outre la diminution de la quantité de liquide de lavage à chauffer, ce qui permet une élévation de température plus rapide.

L'invention n'est nullement limitée au mode de réalisation décrit et illustré qui n'a été donné qu'à titre d'exemple.

## Revendications

1. Réservoir (R) de liquide de lavage dans un véhicule automobile avec une chambre froide (1) et une chambre chaude (2) contenant chacune du liquide de lavage, la chambre chaude (2) étant en échange de chaleur direct ou indirect avec un corps de réchauffage (3) pour réchauffer son liquide de lavage et présentant au moins une paroi (7) la séparant, au moins partiellement, de la chambre froide (1), cette paroi (7) présentant au moins un premier orifice (6) afin d'assurer une circulation de liquide de la chambre froide (1) vers la chambre chaude (2), **caractérisé en ce qu'**il comprend un second orifice (8) disposé sur ladite paroi (7) et assurant une circulation de liquide de la chambre chaude (2) vers la chambre froide (1), ce second orifice (8) étant associé à un dispositif d'obturation (10, 10a ou 10b) permettant la diminution ou l'arrêt de la circulation de liquide correspondante.

2. Réservoir (R) selon la revendication 1, **caractérisé en ce que** la fermeture et l'ouverture du dispositif d'obturation (10, 10a ou 10b) sont régulées en fonction de la température du liquide de lavage.

3. Réservoir (R) selon la revendication 2, **caractérisé en ce que** le dispositif d'obturation (10, 10a ou 10b) est sous la forme d'un thermostat, d'un bilame ou d'un fil thermo-dilatable.

4. Réservoir selon la revendication 3, **caractérisé en ce que** le dispositif d'obturation (10, 10a ou 10b) est placé dans une des chambres (1 ou 2), la température du liquide de lavage de cette chambre (1 ou 2) étant la température de régulation de fermeture et d'ouverture dudit dispositif (10, 10a ou 10b).

5. Réservoir selon la revendication précédente, **caractérisé en ce que** le dispositif d'obturation (10, 10a ou 10b) est placé dans la chambre chaude (2).

6. Réservoir (R) selon la revendication précédente, **caractérisé en ce que** la chambre chaude (2) comporte un conduit de sortie (12) à l'extérieur du réservoir (R) du liquide de lavage contenu dans celle-ci, le dispositif d'obturation (10, 10a ou 10b) étant en position de fermeture tant que la température du liquide de la chambre chaude (2) n'a pas atteint une valeur prédéterminée minimale et/ou en position d'ouverture dès que la température du liquide quittant cette chambre (2) par le conduit (12) dépasse une valeur prédéterminée maximale.

7. Réservoir (R) selon l'une quelconque des revendications précédentes, **caractérisé en ce que** les orifices (6, 8) sont sensiblement alignés sur la hauteur de la paroi (7) de la chambre chaude (2).

8. Réservoir (R) selon l'une quelconque des revendications précédentes, **caractérisé en ce que** la paroi (7) de la chambre chaude (2) présentant les orifices (6, 8) est séparée de la paroi (7a) en regard de la chambre froide par un espacement (11), les orifices (6, 8) de la paroi (7) étant prolongés par un canal respectif (7b) permettant la circulation du liquide de lavage entre les deux chambres (1 et 2).

9. Réservoir (R) selon l'une quelconque des revendications précédentes, **caractérisé en ce qu'**un moyen d'étanchéité (15) est logé au moins partiellement dans le second orifice (8) de la paroi (7) afin de garantir l'étanchéité entre ce second orifice (8) et le dispositif d'obturation (10, 10a ou 10b).

10. Dispositif de lavage, en particulier de vitres ou de projecteurs dans un véhicule automobile, finissant par un système de lavage, **caractérisé en ce qu'**il comprend un réservoir (R) selon l'une quelconque des revendications précédentes, la chambre chaude (2) débouchant directement ou indirectement sur ledit système.
